# EUROPÄISCHE PATENTSCHRIFT

(11) **EP 3 263 916 B1**
(45) Veröffentlichungstag und Bekanntmachung des Hinweises auf die Patenterteilung: **01.04.2020**
(21) Anmeldenummer: 16305791.2
(22) Anmeldetag: 29.06.2016
(51) Int. Cl.: F16B 2/20, F16L 3/233

(54) **VORRICHTUNG ZUM BEFESTIGEN EINES GEGENSTANDES**
DEVICE FOR ATTACHING AN OBJECT
DISPOSITIF DE FIXATION D'UN OBJET

(43) Veröffentlichungstag der Anmeldung: 03.01.2018
(73) Patentinhaber: Nexans, 92400 Courbevoie (FR)
(72) Erfinder: LINDNER, Gerhard, 95703 Plössberg (DE); WITTMANN, Christian, 92727 Waldthurn (DE); TEICHER, Hermann, 92702 Kohlberg (DE)
(74) Vertreter: Feray, Valérie

(56) Entgegenhaltungen:
- EP-A1- 2 881 597
- FR-A1- 2 955 711
- JP-A- 2002 067 830
- US-A- 3 524 226

## Beschreibung

Die Erfindung bezieht sich auf eine Vorrichtung zum Befestigen eines langgestreckten Gegenstandes an einem rippenförmigen Träger gemäß Patentanspruch 1.

Derartige Vorrichtungen sind insbesondere in der Automobiltechnik seit langem bekannt. Mittels einer beispielsweise als Federklemme aus Metall ausgeführten U-förmigen Klammer und handelsüblichen Kabelbindern können als langgestreckte Gegenstände beispielsweise Kabelbäume oder Rohre oder Schläuche im Motorraum eines Kraftfahrzeugs befestigt werden. Dazu können zunächst die Klammern auf im Kraftfahrzeug vorhandene rippenförmige Träger aufgesteckt werden. Ein Kabelbaum oder ein Rohr oder ein Schlauch kann dann mittels eines Kabelbinders an der Klammer festgelegt werden, welcher um den zu befestigenden Gegenstand herumgelegt wird. Diese Befestigung kann auch in umgekehrter Reihenfolge durchgeführt werden.

Die US 3,524,226 A bezieht sich auf eine Vorrichtung zum Aufhängen von Artikeln, die an einer für Kleidungsstücke vorgesehenen Leine hängen. Die Klammer, welche zwei mit Abstand zueinander angeordnete Schenkel hat, wird zum Erreichen der Montageposition auf den an der Leine hängenden Artikel aufgeschoben, wobei sich die beiden Schenkel, die durch ein flexibles Verbindungsteil miteinander verbunden sind, seitlich an den Artikel anlegen. Zur Verbesserung des Halts des Artikels in der Klammer sind innen an den Schenkeln derselben Kerben angebracht. Die Reibungsverhältnisse werden dadurch verbessert.

Aus der DE 20 2014 008 285 U geht eine Vorrichtung zum Befestigen eines langgestreckten Gegenstandes an einem rippenförmigen Träger hervor, welche einen etwa U-förmigen Bügel aus federndem Metall aufweist, der ein im Wesentlichen geradlinig verlaufendes Basisteil und zwei mit Abstand zueinander in der gleichen Richtung von demselben abstehende Schenkel hat. Am Basisteil ist eine nach außen abstehende Öse zum Durchführen eines fadenförmigen Befestigungselements angebracht, das in Montageposition durch die Öse hindurchgezogen und fest um den langgestreckten Gegenstand herumgelegt ist. Innerhalb des Bügels ist ein ebenfalls U-förmiger, aus Kunststoff bestehender Einsatz angeordnet, der unverlierbar mit dem Bügel verbunden ist. Die vom Basisteil fortweisenden Enden der beiden Schenkel des Einsatzes sind innen durch aus mechanisch stabilem Material bestehende Druckkörper mechanisch stabilisiert. Durch die Druckkörper kann eine Beschädigung der Oberfläche des Trägers nicht ausgeschlossen werden. Das kann insbesondere dann zu Problemen führen, wenn der Träger eine mechanisch empfindliche Oberfläche hat und beispielsweise lackiert ist.

Der Erfindung liegt die Aufgabe zugrunde, eine Vorrichtung mit einer Klammer zum Befestigen eines Gegenstandes an einem Träger so zu gestalten, dass eine Beschädigung der Oberfläche des Trägers bei Aufsetzen der Klammer auf denselben ausgeschlossen werden kann.

Diese Aufgabe wird entsprechend der Gesamtheit der Merkmale des Patentanspruchs 1 gelöst.

Beim Aufsetzen der Klammer dieser Vorrichtung auf einen rippenförmigen Träger liegt derselbe zunächst nur an dem zwischen den beiden Platten befindlichen Verbindungselement an. Sie werden dann beim Aufschieben der Klammer durch den Träger, welcher gegen das Verbindungselement gedrückt wird, um ihre Drehstellen geschwenkt, bis sie in ihren Endpositionen an den Seitenflächen des Trägers anliegen. Dabei wird durch die Klammer keine Belastung des Trägers in ihrer Bewegungsrichtung ausgeübt, sondern die beiden Platten werden von der Seite her an den Träger angelegt. Eine Beschädigung der Oberfläche des Trägers, beispielsweise ein Zerkratzen durch Teile der Klammer, kann daher nicht erfolgen.

Die Platten sind auf ihren zur Anlage am Träger bestimmten Flächen mit einem Haftvermittler beschichtet, durch welchen in Montageposition eine feste Anlage der Klammer am Träger erzeugt wird. In der Ruheposition der Klammer ist der Haftvermittler jeweils durch eine Folie abgedeckt. Die Folien werden vor dem Aufsetzen der Klammer auf den Träger entfernt.

An den Platten sind auf einer Seite derselben von ihrer Oberfläche abstehende Vorsprünge angebracht. Die Vorsprünge weisen in Montageposition vom Träger weg. Sie haben jeweils eine schräg verlaufende Anlagefläche, an welcher die Schenkel der Klammer während der Montage derselben mit ihren stirnseitigen Enden anliegen. Die Schenkel der Klammer drücken dadurch bei einer Weiterbewegung der Klammer die Platten gegen den Träger. In der Endposition der Klammer greifen die Vorsprünge der beiden Platten in Ausnehmungen ein, die an den Innenseiten der Schenkel der Klammer angebracht sind. Die Klammer ist dadurch in ihrer Endposition auf dem Träger verriegelt.

Ein Ausführungsbeispiel des Erfindungsgegenstandes ist in den Zeichnungen dargestellt.

Es zeigen:
Fig. 1 eine in der Vorrichtung nach der Erfindung einsetzbare Klammer.
Fig. 2 die Klammer nach Fig. 1 über einem rippenförmigen Träger.
Fig. 3 ein Einzelteil der Klammer in vergrößerter Darstellung.
Fig. 4 bis 7 unterschiedliche Positionen der Klammer nach Fig. 1 beim Aufschieben derselben auf den Träger.

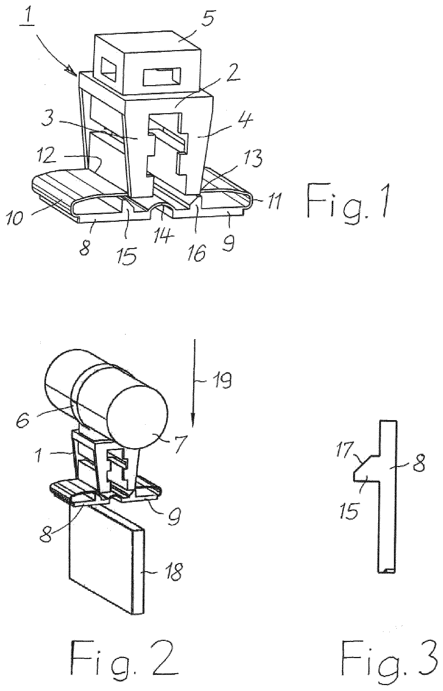

In Fig. 1 ist eine aus einem mechanisch stabilen Kunststoff, wie beispielsweise Polyamid, bestehende Klammer 1 in einer perspektivischen Ansicht dargestellt. Die Klammer 1 ist etwa U-förmig gestaltet. Sie hat ein im Wesentlichen geradliniges Basisteil 2 und zwei mit Abstand zueinander in der gleichen Richtung von demselben abstehende Schenkel 3 und 4. Außen am Basisteil 1 ist ein nur schematisch angedeutetes Befestigungselement 5 angebracht, das zur Befestigung eines langgestreckten
Gegenstandes dient. Das kann beispielsweise mittels eines aus Fig. 2 ersichtlichen Binders 6 erfolgen, der durch eine Öffnung im Befestigungselement 5 hindurchgezogen und um einen langgestreckten Gegenstand 7 herumgelegt werden kann, bei dem es sich beispielsweise um ein Rohr oder einen Kabelbaum handeln kann.

An den freien Enden der Schenkel 3 und 4 ist jeweils eine aus Kunststoff bestehende Platte 8 bzw. 9 angeordnet. Die beiden Platten 8 und 9 verlaufen etwa rechtwinklig zur Richtung der Schenkel 3 und 4. Sie sind mit den Schenkeln 3 und 4 über Filmscharniere 10 und 11 verbunden, die einerseits an den Platten 8 und 9 und andererseits an den Schenkeln 3 und 4 befestigt sind. Die Befestigungen an den Schenkeln 3 und 4 bilden Drehstellen 12 und 13, um welche die Platten 8 und 9 schwenkbar sind. Die Platten 8 und 9 sind durch ein biegbares Verbindungselement 14 miteinander verbunden, das ebenfalls als Filmscharnier ausgeführt sein kann. Die Platten 8 und 9 sowie die Filmscharniere 10 und 11 und das Verbindungselement 14 bestehen mit Vorteil aus dem gleichen Material wie die Klammer 1.

Auf einer ihrer Flachseiten ist auf den Platten 8 und 9 jeweils ein von denselben abstehender Vorsprung 15 bzw. 16 angebracht. Die Vorsprünge 15 und 16 haben gemäß der vergrößerten Darstellung in Fig. 3, welche nur die Platte 8 zeigt, eine schräg verlaufende Anlagefläche 17. Auf dieser Anlagefläche 17 liegt der Schenkel 3 der Klammer 1 während der Montage derselben mit seiner Stirnseite auf. Auf den den Vorsprüngen 15 und 16 abgewandten Seiten sind die Platten 8 und 9 mit einem Haftvermittler beschichtet, der in der Ruheposition der Klammer jeweils mit einer abziehbaren Folie abgedeckt ist.

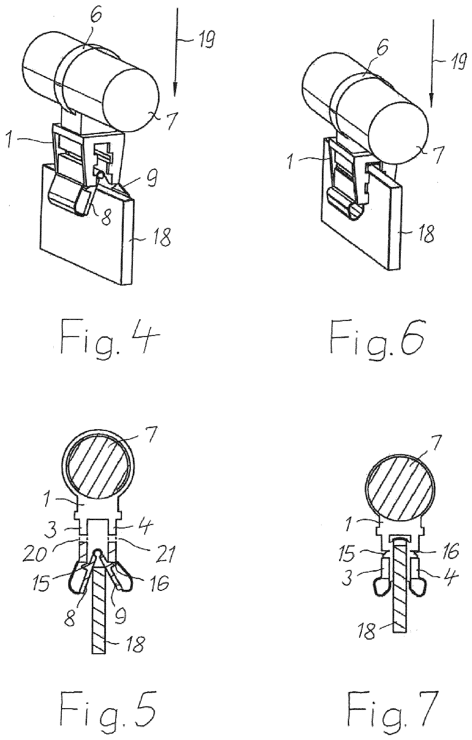

Die Klammer 1 der Vorrichtung nach der Erfindung wird beispielsweise wie folgt auf einem rippenförmigen Träger 18 montiert:
Zunächst werden die Folien, welche den Haftvermittler abdecken, von beiden Platten 8 und 9 abgezogen. Die Klammer 1, die gemäß Fig. 2 bereits mit einem langgestreckten Gegenstand 7 verbunden sein kann, wird dann über dem rippenförmigen Träger 18 so positioniert, wie es aus Fig. 2 hervorgeht. Sie wird danach in Richtung des Pfeiles 19 auf den Träger 18 aufgesetzt und weiter in Richtung des Pfeiles 19 nach unten bewegt. Dadurch drückt der Träger 18 gegen das Verbindungselement 14 zwischen den beiden Platten 8 und 9, so dass dieselben um ihre Drehstellen 12 und 13 geschwenkt werden. Das geht in einer Zwischenposition aus den Fig. 4 und 5 hervor. Die Stirnseiten der Schenkel 3 und 4 liegen in dieser Zwischenposition auf den schrägen Anlageflächen 17 der Vorsprünge 15 und 16 auf.

Bei einer Weiterbewegung der Klammer 1 in Richtung des Pfeiles 19 nach unten, werden die Platten 8 und 9 durch die auf die Vorsprünge 15 und 16 drückenden Stirnseiten der Schenkel 3 und 4 gegen den Träger 18 gedrückt. Die Platten 8 und 9 werden also seitlich an den Träger 18 angelegt bzw. angedrückt, an dem sie wegen des auf den Platten 8 und 9 angebrachten Haftvermittlers fest haften. In der Endposition greifen die Vorsprünge 15 und 16 in Ausnehmungen 20 und 21 der Schenkel 3 und 4 ein, die an den Innenseiten derselben angebracht und in Fig. 5 mit einer Unterbrechung der Schenkel 3 und 4 der Klammer 1 rein schematisch angedeutet sind. Die Klammer 1 ist danach an dem Träger 18 befestigt.

## Patentansprüche

1. Vorrichtung zum Befestigen eines langgestreckten Gegenstandes an einem rippenförmigen Träger (18), bei welcher
- eine etwa U-förmige Klammer (1) aus mechanisch stabilem Material eingesetzt ist, die ein im Wesentlichen geradliniges Basisteil (2) und zwei mit Abstand zueinander in der gleichen Richtung von demselben abstehende Schenkel (3,4) hat, bei welcher
- der langgestreckte Gegenstand in Montageposition am Basisteil (2) der Klammer (1) befestigbar ist und bei welcher die Schenkel (3,4) der Klammer (1) in Montageposition auf zwei einander gegenüberliegenden Seiten des Trägers (18) positionierbar sind, bei welcher
- an den freien Enden der beiden Schenkel (3,4) der Klammer (1) jeweils eine um eine Drehstelle (12,13) schwenkbare Platte (8,9) angeordnet ist, die beide in Ruheposition etwa rechtwinklig zur Richtung der Schenkel (3,4) verlaufen und durch ein biegbares Verbindungselement (14) miteinander verbunden sind,
- die beiden Platten (8,9) beim Aufschieben der Klammer (1) auf den Träger (18) durch denselben derart um ihre Drehstellen (12,13) schwenkbar sind, dass sie in einer Endposition jede auf einer Seite des Trägers (18) an demselben anliegen,
- an jeder Platte (8,9) ein von derselben abstehender Vorsprung (15,16) angebracht ist, der in Montageposition vom Träger (18) weg weist,
- jeder Vorsprung (15,16) eine schräg verlaufende Anlagefläche (17) hat, auf welcher während der Montage der Klammer (1) jeweils ein Schenkel (3,4) derselben mit seiner Stirnfläche aufliegt,
- die Vorsprünge (15,16) der Platten (8,9) in Montageposition in Ausnehmungen (20,21) eingreifen, die an den Innenseiten der Schenkel (3,4) der Klammer (1) angebracht sind, **dadurch gekennzeichnet, dass** die zur Anlage am Träger (18) bestimmten Flächen der beiden Platten (8,9) mit einem Haftvermittler beschichtet sind, der in der Ruheposition der Klammer (1) durch eine Folie abgedeckt ist.

2. Vorrichtung nach Anspruch 1, **dadurch gekennzeichnet, dass** das Verbindungselement (14) ein Filmscharnier ist.

## Claims

1. A device for fastening an elongated object to a rib-shaped support (18), in which
- an approximately U-shaped bracket (1) made of mechanically stable material is used, which has a substantially rectilinear base part (2) and two legs (3, 4) projecting from the same at a distance from each other in the same direction, in which
- the elongated object can be fastened in the mounting position to the base part (2) of the bracket (1) and in which the legs (3, 4) of the bracket (1) can be positioned in the mounting position on two sides of the support (18) opposite from one another, in which
- on the free ends of the two legs (3, 4) of the bracket (1) in each case a plate (8, 9) pivotable about a rotational point (12, 13) is arranged, which both extend in the rest position approximately at right angles to the direction of the legs (3, 4) and are connected to each other by a bendable connecting element (14),
- the two plates (8, 9) when the bracket (1) is pushed onto the support (18) can be pivoted by the same about their rotational points (12, 13) in such a manner that in an end position they each abut on a side of the support (18) against the same,
- to each plate (8, 9) a projection (15, 16) projecting from the same is attached, which points in the mounting position away from the support (18),
- each projection (15, 16) has a an obliquely extending bearing surface (17), on which during the mounting of the bracket (1) in each case a leg (3, 4) of the same rests with its end face,
- the projections (15, 16) of the plates (8, 9) in the mounting position engage in recesses (20, 21), which are attached to the inner sides of the legs (3, 4) of the bracket (1),
**characterized in that**
the surfaces of the two plates (8, 9) intended for bearing on the support (18) are coated with an adhesive agent, which is covered in the rest position of the bracket (1) by a film.

2. The device according to Claim 1, **characterized in that** the connecting element (14) is a film hinge.

## Revendications

1. Dispositif pour la fixation d'un objet de forme allongée sur un support (18) en forme de nervure, dans lequel
- une agrafe (1) globalement en forme de U, constituée d'un matériau mécaniquement stable, est utilisée, qui comprend une partie de base (2) globalement en ligne droite avec deux branches (3, 4) distantes entre elles s'écartant de celle-ci dans la même direction, dans lequel
- l'objet allongé peut être fixé en position de montage sur la partie de base (2) de l'agrafe (1) et dans lequel les branches (3, 4) de l'agrafe (1) peuvent être positionnées en position de montage sur deux côtés opposés du support (18), dans lequel
- au niveau de chacune des extrémités libres des deux branches (3, 4) de l'agrafe (1) est disposée une plaque (8, 9) pivotant autour d'un centre de rotation (12, 13), ces deux plaques s'étendant, en position de repos, de manière globalement perpendiculaire à la direction des branches (3, 4) et étant reliées entre elles par un élément de liaison flexible (14),
- les deux plaques (8, 9) pouvant pivoter, lors de la poussée de l'agrafe (1) sur le support (18), grâce à celui-ci, autour de leurs centres de rotation (12, 13) de façon à ce que, dans une position finale, chacune s'appuie sur un côté du support (18)
- sur chaque plaque (8, 9), est réalisée une saillie (15, 16) s'écartant de celle-ci, qui est orientée loin du support (18) dans la position de montage,
- chaque saillie (15, 16) comprend une surface d'appui inclinée (17) sur chacune desquelles, pendant le montage de l'agrafe (1), s'appuie une branche (3, 4) de celle-ci avec sa face frontale,
- les saillies (15, 16) des plaques (8, 9) s'emboîtent, en position de montage, dans des évidements (20, 21) qui sont réalisés sur les côtés internes des branches (3, 4) de l'agrafe (1),
**caractérisé en ce que** les surfaces, destinées à l'appui contre le support (18), des deux plaques (8, 9) sont revêtues d'un promoteur d'adhérence qui est recouvert d'un film dans la position de repos de l'agrafe (1).

2. Dispositif selon la revendication 1, **caractérisé en ce que** l'élément de liaison (14) est une charnière à film.
